# EUROPÄISCHE PATENTANMELDUNG

(11) **EP 2 594 362 A1**
(43) Veröffentlichungstag der Anmeldung: **22.05.2013**
(21) Anmeldenummer: 11009220.2
(22) Anmeldetag: 21.11.2011
(51) Int. Cl.: B23Q 11/10, B23B 29/04, B23B 29/26

(54) **Vorrichtung für Bearbeitungsmaschinen zum Umrüsten auf andere Werkzeuge und/oder Einstellen der Werkzeuge**

(71) Anmelder: Göltenbodt Präzisionswerkzeug- und Maschinenfabrik GmbH & Co., 71229 Leonberg (DE)
(72) Erfinder:
(74) Vertreter: Jakelski & Althoff

(57) **Zusammenfassung**

In einer Vorrichtung für Bearbeitungsmaschinen zum Umrüsten auf andere Werkzeuge und/oder Einstellen der Werkzeuge mit mindestens einem im Wesentlichen plattenförmigen Grundhalter (1), auf dem wenigstens ein ein spanabhebendes Bearbeitungswerkzeug tragender ein- oder mehrteiliger Werkzeughalter (2) befestigt ist, sind sowohl in dem Grundhalter (1) als auch in dem wenigstens einen, ein- oder mehrteiligen Werkzeughalter (2) eine erste Kühlmittelleitung und eine zweite Kühlmittelleitung angeordnet. Die erste Kühlmittelleitung ist mit mindestens einem ersten Kühlmittelauslass (211) in dem Werkzeughalter (2) verbunden, und die zweite Kühlmittelleitung ist mit mindestens einem zweiten Kühlmittelauslass (221, 222) in dem Werkzeughalter (2) verbunden. Der Grundhalter (1) weist einen ersten Kühlmitteleinlass (11) und einen zweiten Kühlmitteleinlass (12) auf, die jeweils fluidisch mit der ersten Kühlmittelleitung und mit der zweiten Kühlmittelleitung verbunden sind.

## Beschreibung

Die Erfindung betrifft eine Vorrichtung für Bearbeitungsmaschinen zum Umrüsten auf andere Werkzeuge und/oder Einstellen der Werkzeuge mit mindestens einem im Wesentlichen plattenförmigen Grundhalter, auf dem wenigstens ein spanabhebendes Bearbeitungswerkzeug tragender ein- oder mehrteiliger Werkzeughalter befestigt ist.

### Stand der Technik

Eine derartige Vorrichtung zum voreingestellten Umrüsten bei spanabhebenden Bearbeitungsmaschinen ist beispielsweise in der DE 40 36 558 A1 beschrieben. Hierbei ist zwischen einem plattenförmigen Grundhalter mit Anschlag als Koordinatenbasis und einem auf diesem jeweils aufsetzbaren, ein Bearbeitungswerkzeug spannenden Wechselhalter eine Präzisionsgleitführung parallel zur Spindelachse vorgesehen und es werden bei Wiederholungsarbeiten aus früheren Einstellvorgängen gewonnene Daten zur Einstellung des Wechselhalters bei einer sogenannten Voreinstellung verwendet. Dabei werden zur Anschlagbestimmung entsprechende Anschlagmittel, die lediglich im Bereich des Werkzeughalters angeordnet sind, separat beispielsweise an einer optischen Einstellvorrichtung verstellt.

Bei modernen spanabhebenden Bearbeitungsmaschinen, insbesondere bei Mehrspindeldrehautomaten, kommt eine größere Zahl von Werkzeugen zum Einsatz, beispielsweise unterschiedliche Meißel, Bohrer und dergleichen. Die Werkzeuge sind jeweils an einem Wechselhalter eines Werkzeughalters angeordnet. Der Werkzeughalter ist auf dem Grundhalter befestigt. Während des Bearbeitungsvorganges werden die Werkzeuge gekühlt. Die Kühlmittelzuführung erfolgt dabei durch Schläuche, Rohre, Leitungen oder dergleichen, die zu jedem der Wechselhalter führen. Eine solche Mehrzahl von Kühlmittelzuführschläuchen, -rohren oder -leitungen ist während des Betriebs der Bearbeitungsmaschine störend und störanfällig, beispielsweise durch Abriss der Schläuche oder Beschädigungen der Rohre und Leitungen. Ganz besonders nachteilig ist, dass Späne sich an den Rohren, Schläuchen, Leitungen sammeln und auf diese Weise eine Behinderung des Spanabflusses entstehen kann. daher wurde in dem Gebrauchsmuster DE 20 2009 015 318 U1 vorgeschlagen sowohl in dem Grundhalter als auch in dem ein- oder mehrteiligen Werkzeughalter Kühlmittelkanäle anzuordnen, die im montierten Zustand des Wechselhalters an dem Grundhalter fluidisch miteinander verbunden sind. Hierbei wird die Kühlmittelzuführung in den Grundhalter und in die Werkzeughalter verlegt, so dass Kühlmittelzuführungsschläuche und -leitungen und dergleichen vollständig entfallen können.

Allerdings ermöglicht diese Vorrichtung nur die Zuführung eines Kühlmittels mit einem einzigen Druck. Wenn es gewünscht ist, eine Kühlmittelzuführung unter Niederdruck durch eine Kühlmittelzuführung unter Hochdruck zu ersetzen, um beispielsweise beim Tieflochbohren das Bohrloch zuverlässig ausspülen zu können oder einen Spanabbruch durch einen hohen Kühlmitteldruck zu erreichen, so ist dies nur durch das Auswechseln der Kühlmittelquelle möglich. Auch eine Einstellung eines Kühlmitteldrucks kann nur an der Kühlmittelquelle erfolgen. Ein gleichzeitiger Einsatz mehrerer Kühlmittelströme mit unterschiedlichen Drücken ist mit der bekannten Vorrichtung überhaupt nicht möglich. Es ist daher Aufgabe der vorliegenden Erfindung, eine Vorrichtung bereitzustellen, welche es ermöglicht, unterschiedliche Kühlmitteldrücke zu applizieren, wobei eine Steuerung des Kühlmitteldrucks direkt am Werkzeughalter möglich ist.

### Vorteile der Erfindung

Diese Aufgabe wird durch die erfindungsgemäße Vorrichtung für Bearbeitungsmaschinen zum Umrüsten auf andere Werkzeuge und/oder Einstellen der Werkzeuge mit mindestens einem im Wesentlichen plattenförmigen Grundhalter gelöst, auf dem wenigstens ein, ein spanabhebendes Bearbeitungswerkzeug tragender, ein- oder mehrteiliger Werkzeughalter befestigt ist. Sowohl in dem Grundhalter als auch in dem wenigstens einen, ein- oder mehrteiligen Werkzeughalter sind eine erste Kühlmittelleitung und eine zweite Kühlmittelleitung angeordnet. Die erste Kühlmittelleitung ist mit mindestens einem ersten Kühlmittelauslass in dem Werkzeughalter verbunden, und die zweite Kühlmittelleitung ist mit mindestens einem zweiten Kühlmittelauslass in dem Werkzeughalter verbunden. Dies ermöglicht es den ersten Kühlmittelanschluss mit einer ersten Kühlmittelquelle zu verbinden und den zweite Kühlmittelanschluss mit einer zweiten Kühlmittelquelle zu verbinden. Die zweite Kühlmittelquelle kann dann ein Kühlmittel mit einem höheren Druck bereitstellen, als die erste Kühlmittelquelle.

Bevorzugt weist der Grundhalter mindestens eine Einstelleinrichtung auf, die eingerichtet ist, um die fluidische Verbindung des ersten Kühlmitteleinlasses mit einem Abschnitt der ersten Kühlmittelleitung und/oder mit einem Abschnitt der zweiten Kühlmittelleitung zu unterbrechen, und um die fluidische Verbindung des zweiten Kühlmitteleinlasses mit einem Abschnitt der ersten Kühlmittelleitung und/oder mit einem Abschnitt der zweiten Kühlmittelleitung zu unterbrechen. Hierdurch kann dem Werkzeughalter wahlweise nur Kühlmittel aus der ersten Kühlmittelquelle zugeführt, um Kühlmittel mit einem geringen Druck bereitzustellen oder es kann nur Kühlmittel aus der zweiten Kühlmittelquelle zugeführt werden, um Kühlmittel mit einem hohen Druck bereitzustellen. Alternativ kann auch Kühlmittel aus beiden Kühlmittelquellen in den Werkzeughalter geleitet werden, um gleichzeitig Kühlmittel mit zwei unterschiedlichen Drücken bereitzustellen. Eine teilweise Unterbrechung einer Kühlmittelleitung ermöglicht eine Verringerung eines Kühlmitteldruckes durch direkte Einstellung am Grundhalter, ohne hierzu den Eingangsdruck der jeweiligen Kühlmittelquelle ändern zu müssen.

Die Einstelleinrichtung umfasst vorzugsweise mindestens vier Einstellelemente, wobei jedes Einstellelement eingerichtet ist, um eine der beiden Kühlmitteleitungen wahlweise ganz oder teilweise zu unterbrechen. Dies ermöglicht es, alle vorstehend aufgeführten Kühlmittelverteilungen im Werkzeughalter zu realisieren. Hierbei sind insbesondere mindestens zwei Einstellelemente in der ersten Kühlmittelleitung angeordnet und mindestens zwei Einstellelemente sind in der zweiten Kühlmittelleitung angeordnet. Es ist besonders bevorzugt, dass die erste Kühlmittelleitung einen Einlassbereich und einen Auslassbereich aufweist, wobei der erste Kühlmitteleinlass mit dem Einlassbereich der ersten Kühlmittelleitung verbunden ist und ein Einstellelement eingerichtet ist, um eine Verbindung zwischen dem Einlassbereich und dem Auslassbereich der ersten Kühlmittelleitung ganz oder teilweise zu unterbrechen. Weiterhin ist es besonders dass die zweite Kühlmittelleitung einen Einlassbereich und einen Auslassbereich aufweist, wobei der zweite Kühlmitteleinlass mit dem Einlassbereich der zweiten Kühlmittelleitung verbunden ist und ein Einstellelement eingerichtet ist, um eine Verbindung zwischen dem Einlassbereich und dem Auslassbereich der zweiten Kühlmittelleitung ganz oder teilweise zu unterbrechen. Hierdurch genügt jeweils die Betätigung eines einzigen Einstellelements am Werkzeughalter, um eine der Kühlmittelquellen vom jeweiligen Auslassbereich ihrer Kühlmittelleitung zu trennen oder um den Druck des in den Auslassbereich einer Kühlmittelleitung einströmenden Kühlmittels zu verringern. Es ist ganz besonders bevorzugt, dass ein Einstellelement eingerichtet ist, um eine Verbindung zwischen dem Einlassbereich der ersten Kühlmittelleitung und dem Auslassbereich der zweiten Kühlmittelleitung ganz oder teilweise zu unterbrechen und ein Einstellelement eingerichtet ist, um eine Verbindung zwischen dem Einlassbereich der zweiten Kühlmittelleitung und dem Auslassbereich der ersten Kühlmittelleitung ganz oder teilweise zu unterbrechen. Auf diese Weise genügt jeweils die Betätigung eines einzigen Einstellelements, um zu steuern, ob Kühlmittel in einen der beiden Auslassbereiche einströmen soll.

Jede Kühlmittelleitung weist vorzugsweise mindestens zwei Anschlussbereiche auf. Als Anschlussbereich wird erfindungsgemäß ein Bereich der Kühlmitteleitung verstanden, welcher unmittelbar mit dem Auslassbereich der Kühlmittelleitung verbunden ist und der mindestens eine Auslassöffnung aufweist, um einem an einem Wechselhalter befestigen Werkzeug Kühlmittel zuzuführen. Mindestens ein Anschlussbereich jeder Kühlmittelleitung ist bevorzugt durch einen Wechselhalter verschlossen, wobei gleichzeitig mindestens ein Anschlussbereich derselben Kühlmittelleitung mit einem Kühlmittelauslass verbunden ist, der an dem Wechselhalter angeordnet ist. Diese Anordnung ermöglicht es, eine durch einen Anschlussbereich vorgegebene Position zur Verbindung mit einem Kühlmittelanschluss zu nutzen und eine andere Position ungenutzt zu lassen. Ein Wechselhalter mit einem Kühlmittelauslass kann so beispielsweise in zwei zueinander um 180° gedrehten Positionen am Werkzeughalter befestigt werden, wobei der Kühlmittelauslass bei der Drehung in zwei unterschiedlichen Positionen in Bezug auf den Werkzeughalter positioniert wird. Dabei ermöglicht es die bevorzugte Anordnung der Auslassbereiche, den Kühlmittelauslass in jeder dieser Positionen mit Kühlmittel zu versorgen. Gleichzeitig wird der ungenutzte Kühlmittelauslass vom Werkzeughalter verschlossen, so dass ein unerwünschter Kühlmittelauslass aus diesem Auslassbereich unterbleibt.

Ein Wechselhalter kann erfindungsgemäß auch mehrere Kühlmittelauslässe aufweisen. So kann beispielsweise die erste Kühlmittelleitung mit einem ersten Kühlmittelauslass in dem Werkzeughalter verbunden sein und die zweite Kühlmittelleitung mit zwei zweiten Kühlmittelauslässen in dem Werkzeughalter verbunden sein. Mehrere Kühlmittelauslässe an einer Kühlmittelleitung ermöglichen es ein Werkzeug gleichzeitig aus unterschiedlichen Richtungen mit Kühlmittel desselben Drucks zu versorgen, ohne hierbei die Möglichkeit einzuschränken, zusätzlich über den Kühlmittelauslass der anderen Kühlmittelleitung Kühlmittel mit einem anderen Druck zu applizieren.

Der Grundhalter und der Werkzeughalter sind insbesondere relativ verschieblich zueinander angeordnet. Hierbei kann der Werkzeughalter einen voreingestellten Nullpunkt aufweisen. Der Werkzeughalter kann auch entlang seiner Längsachse voreinstellbar sein. Es ist erfindungsgemäß besonders bevorzugt, dass der Werkzeughalter sowohl einen voreingestellten Nullpunkt aufweist, als auch entlang seiner Längsachse voreinstellbar ist, um dem Nutzer eine maximal Flexibilität beim Einsatz des Werkzeughalters zu gewähren. Wenn der Werkzeughalter voreinstellbar ist, ist es ganz besonders bevorzugt, dass der Abschnitt der ersten Kühlmittelleitung, welcher im Grundhalter angeordnet ist in jeder Voreinstellungsposition des Werkzeughalters mit dem Abschnitt der ersten Kühlmittelleitung, welcher im Werkzeughalter angeordnet ist, fluidisch verbunden ist, und der Abschnitt der zweiten Kühlmittelleitung, welcher im Grundhalter angeordnet ist in jeder Voreinstellungsposition des Werkzeughalters mit dem Abschnitt der zweiten Kühlmittelleitung, welcher im Werkzeughalter angeordnet ist, fluidisch verbunden ist. Die kann erfindungsgemäß erreicht werden, indem in dem Werkzeughalter auf seiner dem Grundhalter zugewandten Seite in Verschiebungsrichtung über eine vorgebbare Länge offene Kanäle angeordnet sind, wobei eine fluidische Verbindung zwischen den Kanälen und Auslassöffnungen des Grundhalters ausgebildet ist.

Der Werkzeughalter kann ein- oder mehrteilig ausgebildet sein. So kann beispielsweise der Werkzeughalter einen Zwischenhalter und einen Wechselhalter umfassen, wobei an dem Wechselhalter die Werkzeuge angeordnet sind und der Zwischenhalter als Adapterstück zwischen Grundhalter und Wechselhalter dient. Es kann aber auch vorgesehen sein, nur einen Wechselhalter vorzusehen, der unmittelbar auf dem Grundhalter befestigt ist und seinerseits die Werkzeuge trägt.

### Kurze Beschreibung der Zeichnungen

Ausführungsbeispiele der Erfindung sind in den Zeichnungen dargestellt und in der nachfolgenden Beschreibung näher erläutert.
Fig. 1 zeigt eine isometrische Darstellung einer Ausführungsform der erfindungsgemäßen Vorrichtung.
Fig. 2 zeigt eine halbtransparente Darstellung der Ausführungsform der erfindungsgemäßen Vorrichtung gemäß Fig. 1.
Fig. 3 zeigt einen Querschnitt der Ausführungsform der erfindungsgemäßen Vorrichtung gemäß Fig. 1 in einer ersten Einstellposition einer Einstelleinrichtung.
Fig. 4a zeigt einen Schnitt entlang der Linie A-A in Fig. 2 in einer ersten Einstellposition der Einstelleinrichtung.
Fig. 4b zeigt einen Schnitt entlang der Linie B-B in Fig. 2 in einer ersten Einstellposition der Einstelleinrichtung.
Fig. 4c zeigt einen Schnitt entlang der Linie C-C in Fig. 2 in einer ersten Einstellposition der Einstelleinrichtung.
Fig. 5 zeigt einen Druckverlauf in der ersten Einstellposition der Einstelleinrichtung.
Fig. 6 zeigt einen Querschnitt der Ausführungsform der erfindungsgemäßen Vorrichtung gemäß Fig. 1 in einer zweiten Einstellposition der Einstelleinrichtung.
Fig. 7a zeigt einen Schnitt entlang der Linie A-A in Fig. 2 in einer zweiten Einstellposition der Einstelleinrichtung.
Fig. 7b zeigt einen Schnitt entlang der Linie B-B in Fig. 2 in einer zweiten Einstellposition der Einstelleinrichtung.
Fig. 7c zeigt einen Schnitt entlang der Linie C-C in Fig. 2 in einer zweiten Einstellposition der Einstelleinrichtung.
Fig. 8 zeigt einen Druckverlauf in der zweiten Einstellposition der Einstelleinrichtung.
Fig. 9 zeigt einen Querschnitt der Ausführungsform der erfindungsgemäßen Vorrichtung gemäß Fig. 1 in einer dritten Einstellposition der Einstelleinrichtung.
Fig. 10a zeigt einen Schnitt entlang der Linie A-A in Fig. 2 in einer dritten Einstellposition der Einstelleinrichtung.
Fig. 10b zeigt einen Schnitt entlang der Linie B-B in Fig. 2 in einer dritten Einstellposition der Einstelleinrichtung.
Fig. 10c zeigt einen Schnitt entlang der Linie C-C in Fig. 2 in einer dritten Einstellposition der Einstelleinrichtung.
Fig. 11 zeigt einen Druckverlauf in der dritten Einstellposition der Einstelleinrichtung.
Fig. 12 zeigt einen Querschnitt der Ausführungsform der erfindungsgemäßen Vorrichtung gemäß Fig. 1 in einer vierten Einstellposition der Einstelleinrichtung.
Fig. 13a zeigt einen Schnitt entlang der Linie A-A in Fig. 2 in einer vierten Einstellposition der Einstelleinrichtung.
Fig. 13b zeigt einen Schnitt entlang der Linie B-B in Fig. 2 in einer vierten Einstellposition der Einstelleinrichtung.
Fig. 13c zeigt einen Schnitt entlang der Linie C-C in Fig. 2 in einer vierten Einstellposition der Einstelleinrichtung.
Fig. 14 zeigt einen Druckverlauf in der vierten Einstellposition der Einstelleinrichtung.
Fig. 15 zeigt eine Seitenansicht einer Ausführungsform der erfindungsgemäßen Vorrichtung.
Fig. 16 zeigt eine Aufsicht auf die Ausführungsform der erfindungsgemäßen Vorrichtung gemäß Fig. 15.
Fig. 17 zeigt eine Seitenansicht einer weiteren Ausführungsform der erfindungsgemäßen Vorrichtung.
Fig. 18 zeigt eine Aufsicht auf die Ausführungsform der erfindungsgemäßen Vorrichtung gemäß Fig. 17.
Fig. 19 zeigt einen Schnitt eines Ausschnitts der Ausführungsform der erfindungsgemäßen Vorrichtung gemäß Fig. 17.
Fig. 20 zeigt einen Querschnitt der Verbindung zwischen einem Grundhalter und einem Wechselhalter in einer Ausführungsform der Erfindung.
Fig. 21 zeigt einen Kühlmittelauslass gemäß einer Ausführungsform der Erfindung.

### Beschreibung von Ausführungsbeispielen

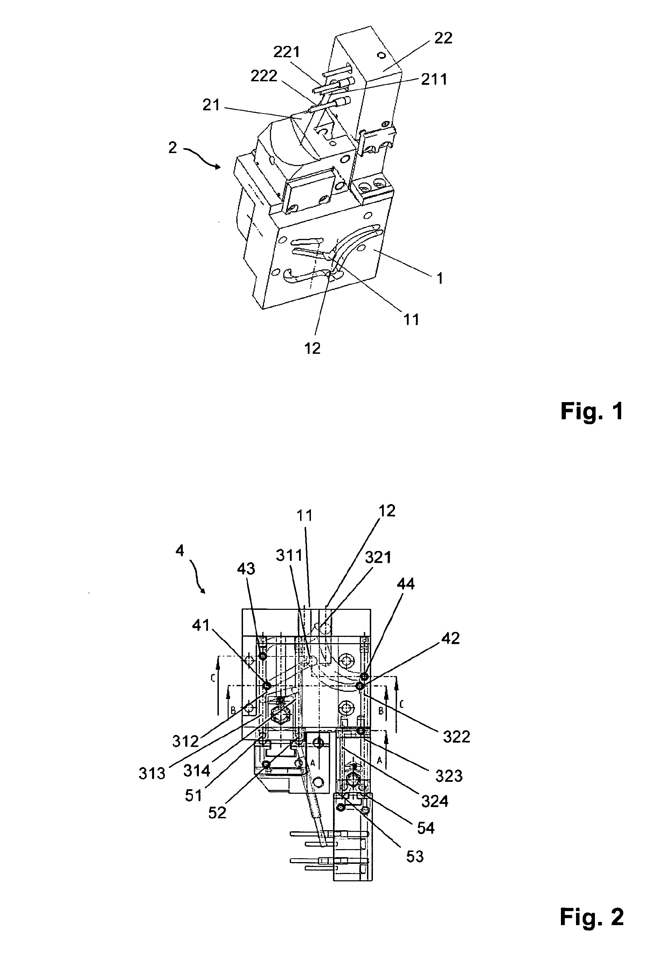

Eine isometrische Darstellung einer Ausführungsform der erfindungsgemäßen Vorrichtung ist in Fig. 1 gezeigt. Die Vorrichtung weist einen im Wesentlichen plattenförmigen Grundhalter 1, und einen Werkzeughalter 2 auf. Der Werkzeughalter besteht aus zwei Wechselhaltern 21, 22. Der erste Wechselhalter 21 weist einen Kühlmittelauslass 211 auf und der zweite Wechselhalter 22 weist zwei Kühlmittelauslässe 221, 222 auf. Im Grundhalter 1 sind zwei Kühlmitteleinlässe 11, 12 angeordnet. Der erste Kühlmitteleinlass 11 kann mit einer ersten Kühlmittelquelle (nicht gezeigt) verbunden werden, welche Kühlmittel bzw. Schmiermittel mit einem niedrigen Druck p₁ von beispielsweise 1 MPa bereitstellt. Der zweite Kühlmitteleinlass 12 kann mit einer zweiten Kühlmittelquelle (nicht gezeigt) verbunden werden, welche Kühlmittel bzw. Schmiermittel mit einem hohen Druck p₂ von beispielsweise 8 MPa bereitstellt. Es ist zweckmäßig, dass die zweite Kühlmittelquelle einen Kühlmittelfilter aufweist, um das Kühlmittel von Verunreinigungen zu befreien, bevor es mit einem hohen Druck in die erfindungsgemäße Vorrichtung eingeleitet wird. Vorzugsweise stellen beide Kühlmittelquellen dasselbe Kühlmittel mit unterschiedlichen Drücken bereit. Es ist allerdings prinzipiell auch möglich mit den beiden Kühlmittelquellen unterschiedliche Kühlmittel in den Grundhalter einzuleiten. In diesem Fall wird es allerdings zu einer Vermischung der beiden Kühlmittel an einem zu bearbeitenden Werkstück kommen, so dass ein sortenreines Sammeln und Wiederverwerten der Kühlmittel nicht möglich ist.

In Fig. 2 ist eine halbtransparente Darstellung (bzw. Darstellung mit unsichtbaren Kanten) der erfindungsgemäßen Vorrichtung gezeigt. Hierin ist der Verlauf von fluidisch miteinander verbundenen Kühlmittelleitungen im Grundhalter, im Grundhalter und im Wechselhalter dargestellt. Vier Stellschrauben 41, 42, 43, 44 sind so in Bohrungen im Grundhalter angeordnet, dass sie jeweils eine der Kühlmittelleitungen 31, 32 ganz oder teilweise unterbrechen können. Sie fungieren als Einstellelemente 41, 42, 43, 44 und bilden gemeinsam eine Einstelleinrichtung 4. Die erste Kühlmittelleitung weist einen ersten Einlassbereich 311, einen ersten Auslassbereich 312 und zwei erste Anschlussbereiche 313, 314 auf. Die zweite Kühlmittelleitung weist einen zweiten Einlassbereich 321, einen zweiten Auslassbereich 322 und zwei zweite Anschlussbereiche 323, 324 auf. Der erste Einlassbereich 311 ist mit dem ersten Kühlmitteleinlass 11 sowie mit einem dritten Kühlmitteleinlass 11a verbunden. Der zweite Einlassbereich 312 ist mit dem zweiten Kühlmitteleinlass 12 sowie mit einem vierten Kühlmitteleinlass 12a verbunden. Zwischen dem ersten Einlassbereich 311 und dem ersten Auslassbereich 312 ist das erste Einstellelement 41 angeordnet. Zwischen dem ersten Einlassbereich 311 und dem zweiten Auslassbereich 322 ist das zweite Einstellelement 42 angeordnet. Zwischen dem zweiten Einlassbereich 321 und dem ersten Auslassbereich 312 ist das dritte Einstellelement 43 angeordnet. Zwischen dem zweiten Einlassbereich 321 und dem zweiten Auslassbereich 322 ist das vierte Einstellelement 44 angeordnet. Der erste Wechselhalter 21 verschließt einen der ersten Anschlussbereiche 313 und stellt durch eine im ersten Wechselhalter 21 angeordnete Leitung eine Verbindung des anderen ersten Anschlussbereichs 314 mit einem Kühlmittelauslass 211 her. Der zweite Wechselhalter 22 verschließt einen der zweiten Anschlussbereiche 323 und stellt durch eine im zweiten Wechselhalter 22 angeordnete, sich verzweigende Leitung eine Verbindung des anderen zweiten Auslassbereichs 324 mit zwei Kühlmittelauslässen 211, 212 her. Außerdem weist jeder Anschlussbereich 313, 314, 323, 324 weiterhin eine Stellschraube 51, 52, 53, 54 auf, die als Verschlusselement fungiert, so dass zusätzlich zum Verschluss eines nicht benötigten Anschlussbereichs 313, 324 durch den jeweiligen Wechselhalter 21, 22 auch noch ein Verschluss durch Schließen des jeweiligen Verschlusselements 51, 53 möglich ist.

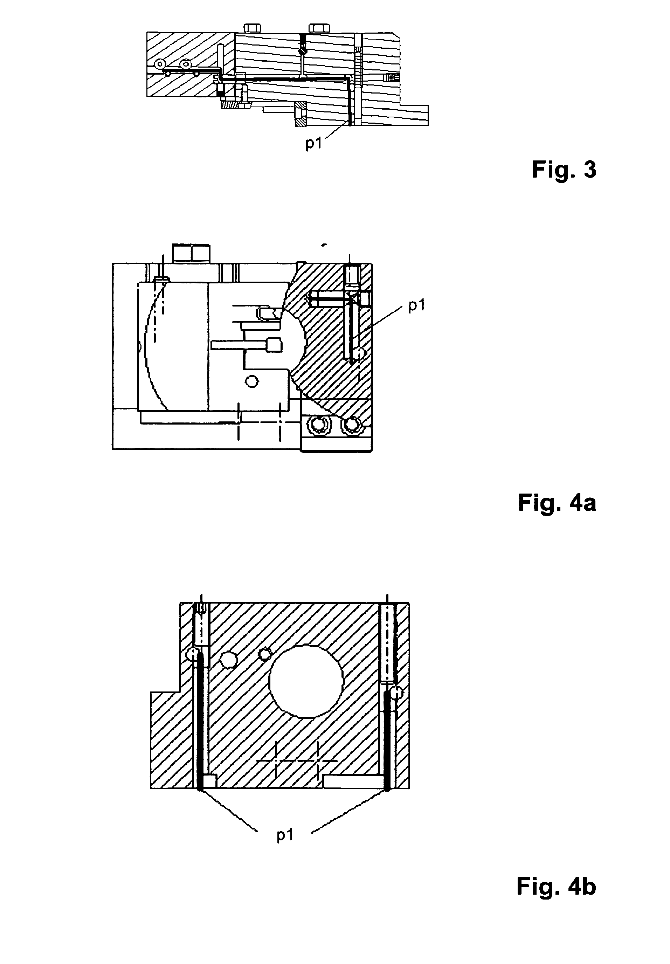

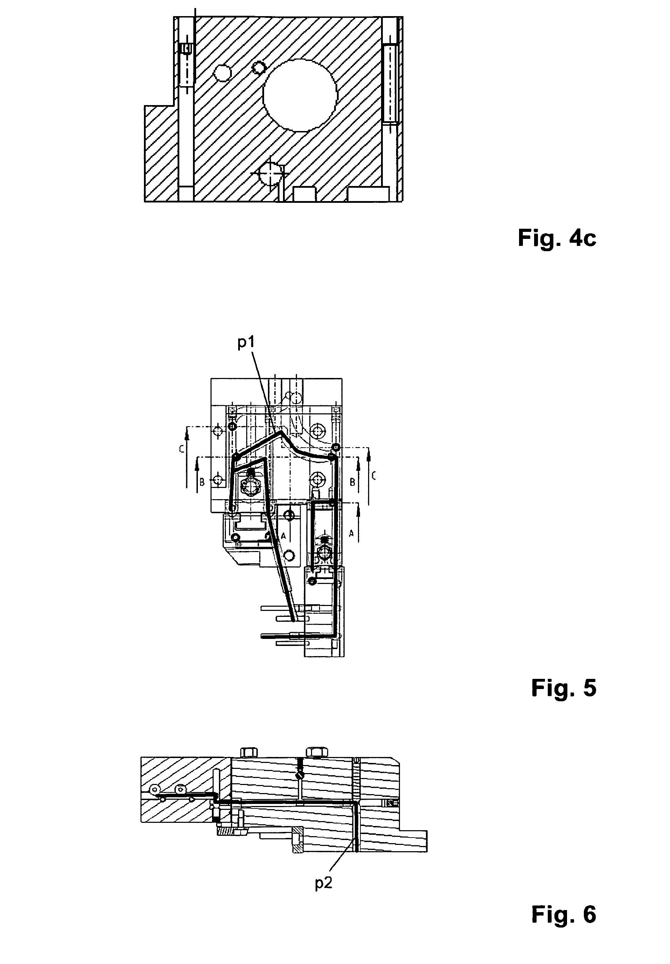

In einer ersten Einstellposition der Einstelleinrichtung werden alle Kühlmittelauslässe 211, 221, 222 mit dem niedrigen Druck p₁ versorgt, welcher von einer Kühlmittelquelle am ersten Kühlmitteleinlass 11 bereitgestellt wird. Hierbei sind das erste Einstellelement 41 und das zweite Einstellelement 42 geöffnet und das dritte Einstellelement 43 und das vierte Einstellelement 44 sind geschlossen. Unter "geschlossen" wird im folgenden verstanden, dass die Kühlmittelleitung, in welcher das geschlossene Einstellelement angeordnet ist, vollständig vom Einstellelement unterbrochen wird und unter "geöffnet" wird verstanden, dass die Kühlmittelleitung, in welcher das geöffnete Einstellelement angeordnet ist, weder vollständig noch teilweise vom Einstellelement unterbrochen wird. Der Verlauf des Kühlmittels aus der ersten Kühlmittelquelle in dieser ersten Einstellposition ist in Fig. 3, 4a, 4b, 4c und 5 gezeigt, wobei Fig. 3 einen Querschnitt der erfindungsgemäßen Vorrichtung zeigt, Fig. 4a einen Schnitt entlang der Linie A-A in Fig. 2 zeigt, Fig. 4b einen Schnitt entlang der Linie B-B in Fig. 2 zeigt, Fig. 4c einen Schnitt entlang der Linie C-C in Fig. 2 zeigt und Fig.5 eine halbtransparente Darstellung der erfindungsgemäßen Vorrichtung zeigt. Es ist auch möglich, nur den Kühlmittelauslass 211 des ersten Wechselhalters 21 mit Kühlmittel zu versorgen und die übrigen Kühlmittelauslässe 221, 222 nicht zu nutzen, indem das zweite Einstellelement 42 geschlossen wird. Weiterhin ist es möglich, nur die Kühlmittelauslässe 221,222 des zweiten Wechselhalters 22 mit Kühlmittel zu versorgen und den übrigen Kühlmittelauslass 211 nicht zu nutzen, indem das erste Einstellelement 41 geschlossen wird.

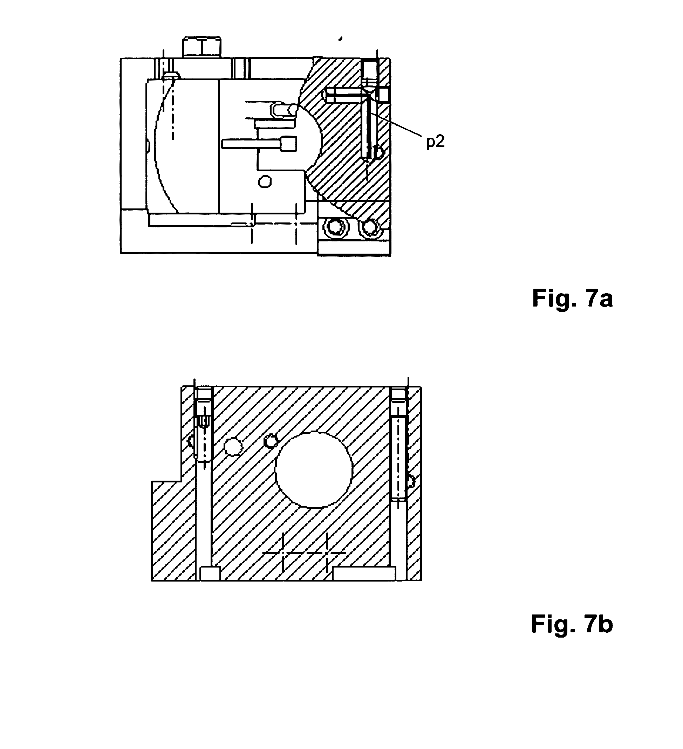

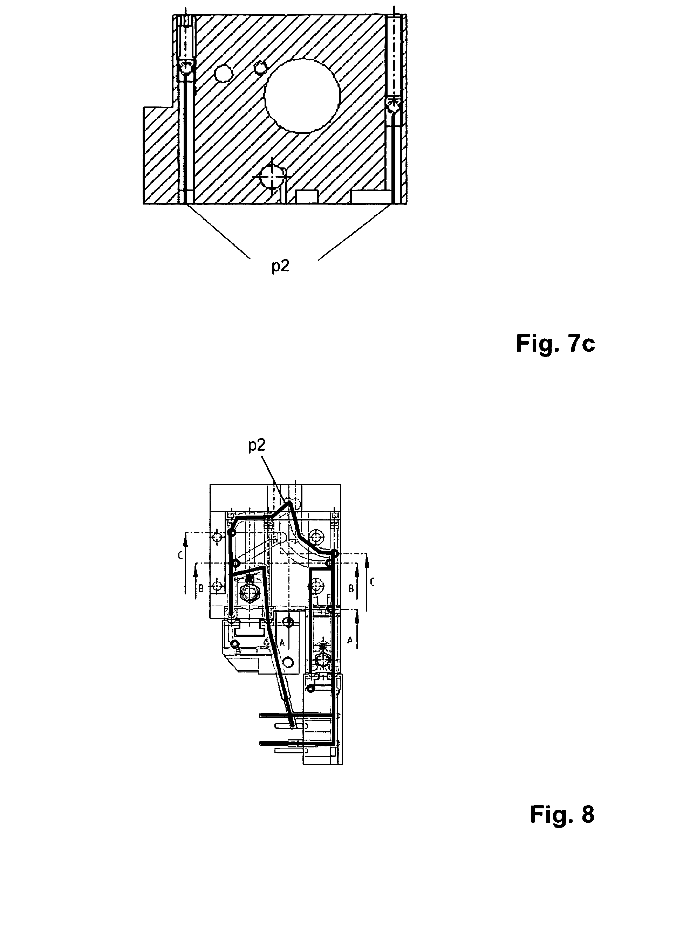

In einer zweiten Einstellposition der Einstelleinrichtung werden alle Kühlmittelauslässe 211, 221, 222 mit dem hohen Druck p₂ versorgt, welcher von einer Kühlmittelquelle am zweiten Kühlmitteleinlass 12 bereitgestellt wird. Hierbei sind das dritte Einstellelement 43 und das vierte Einstellelement 44 geöffnet und das erste Einstellelement 41 und das zweite Einstellelement 42 sind geschlossen. Der Verlauf des Kühlmittels aus der zweiten Kühlmittelquelle in dieser zweiten Einstellposition ist in Fig. 6, 7a, 7b, 7c und 8 gezeigt. Es ist auch möglich, nur den Kühlmittelauslass 211 des ersten Wechselhalters 21 mit Kühlmittel zu versorgen und die übrigen Kühlmittelauslässe 221, 222 nicht zu nutzen, indem das vierte Einstellelement 44 geschlossen wird. Weiterhin ist es möglich, nur die Kühlmittelauslässe 221,222 des zweiten Wechselhalters 22 mit Kühlmittel zu versorgen und den übrigen Kühlmittelauslass 211 nicht zu nutzen, indem das dritte Einstellelement 43 geschlossen wird.

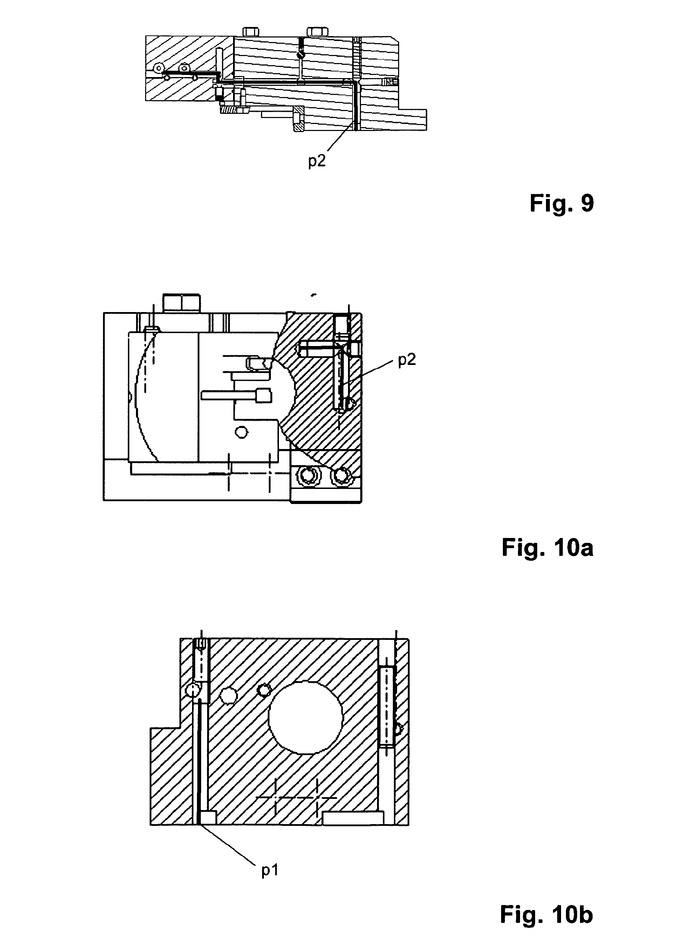

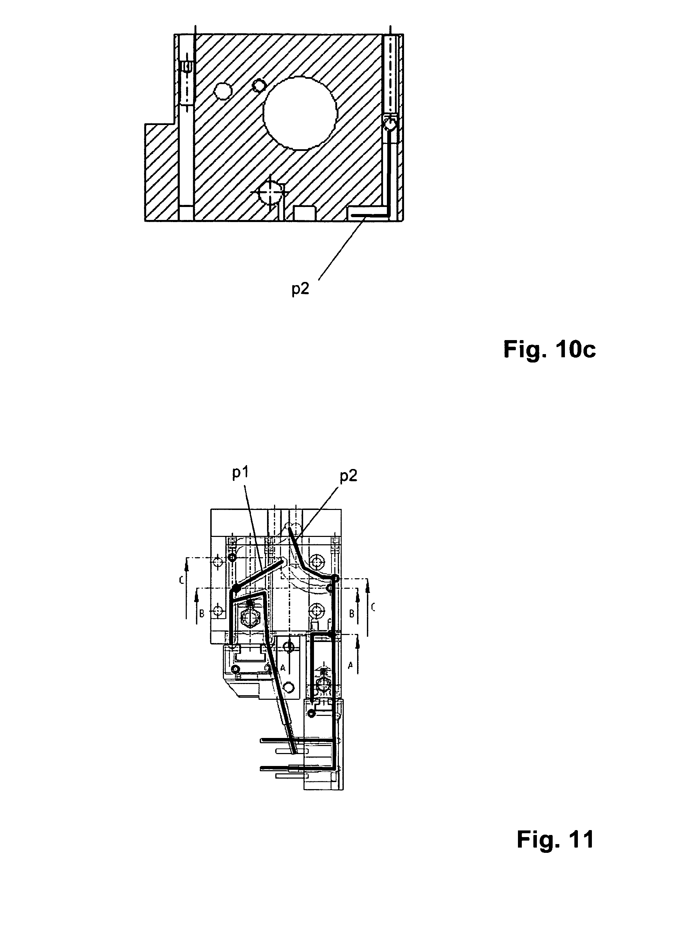

In einer dritten Einstellposition der Einstelleinrichtung wird der Kühlmittelauslass 211 des ersten Wechselhalter 21 mit dem niedrigen Druck p₁ versorgt und die Kühlmittelauslässe 221, 222 des zweiten Wechselhalters 22 werden mit dem hohen Druck p₂ versorgt. Hierbei sind das erste Einstellelement 41 und das vierte Einstellelement 44 geöffnet und das zweite Einstellelement 42 und das dritte Einstellelement 43 sind geschlossen. Der Verlauf des Kühlmittels aus der ersten und aus der zweiten Kühlmittelquelle in dieser dritten Einstellposition ist in Fig. 9, 10a, 10b, 10c und 11 gezeigt.

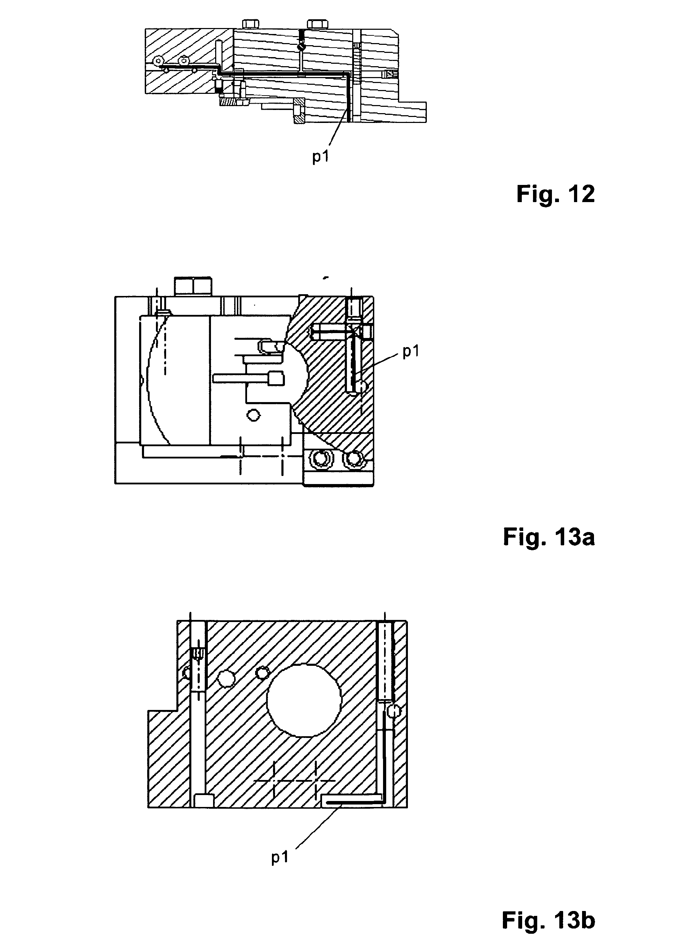

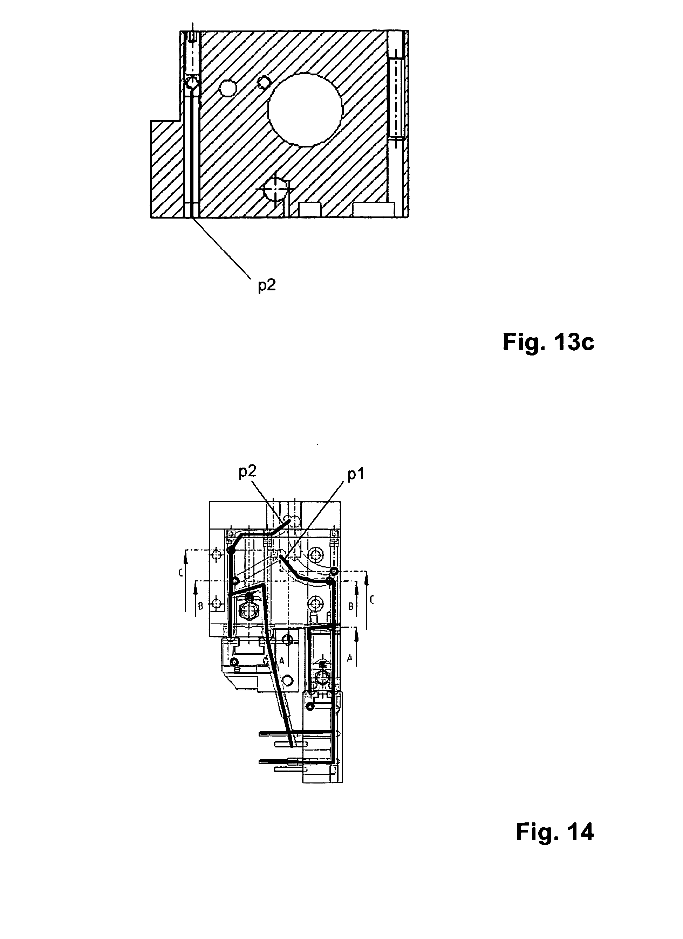

In einer vierten Einstellposition der Einstelleinrichtung wird der Kühlmittelauslass 211 des ersten Wechselhalters 21 mit dem hohen Druck p₂ versorgt und die Kühlmittelauslässe 221, 222 des zweiten Wechselhalters 22 werden mit dem niedrigen Druck p₁ versorgt. Hierbei sind das zweite Einstellelement 42 und das dritte Einstellelement 43 geöffnet und das erste Einstellelement 41 und das vierte Einstellelement 44 sind geöffnet. Der Verlauf des Kühlmittels aus der ersten und aus der zweiten Kühlmittelquelle in dieser vierten Einstellposition ist in Fig. 12, 13a, 13b, 13c und 14 gezeigt.

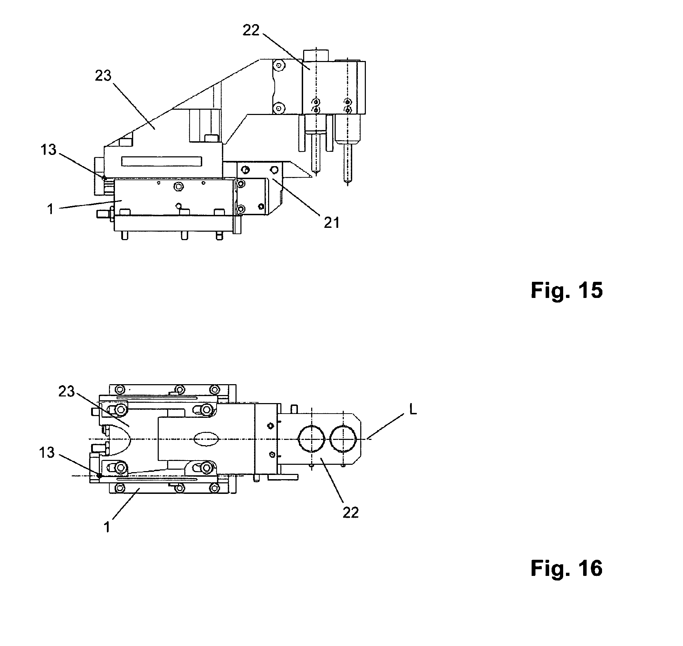

Eine Seitenansicht einer Ausführungsform der erfindungsgemäßen Vorrichtung, in welcher der Grundhalter 1 als Basis für eine Nullpunktposition des Werkzeughalters 2 fungiert, ist in Fig. 15 gezeigt. Der Werkzeughalterhalter 2 besteht aus zwei Wechselhaltern 21, 22 und einem Zwischenhalter 23. Fig. 16 zeigt eine Aufsicht auf diese Ausführungsform, in welcher der Nullpunktanschlag 13 des Wechselhalters 2 am Grundhalter 1 zu erkennen ist.

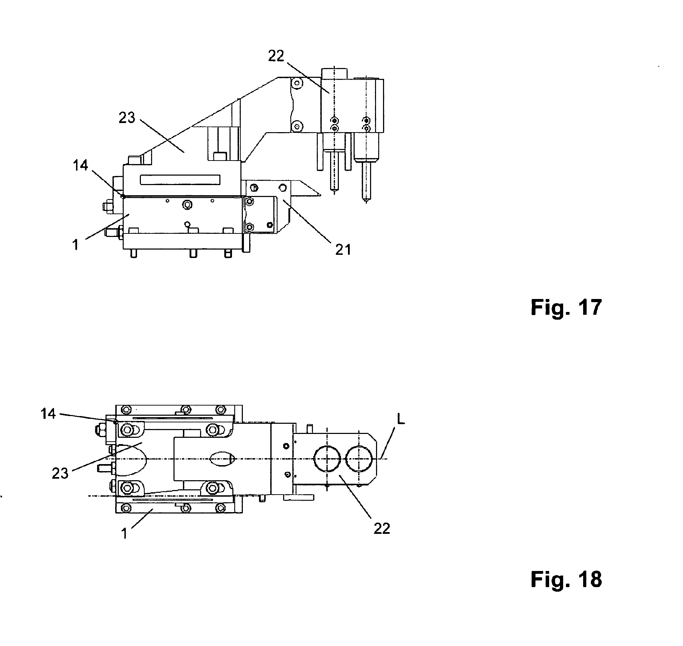

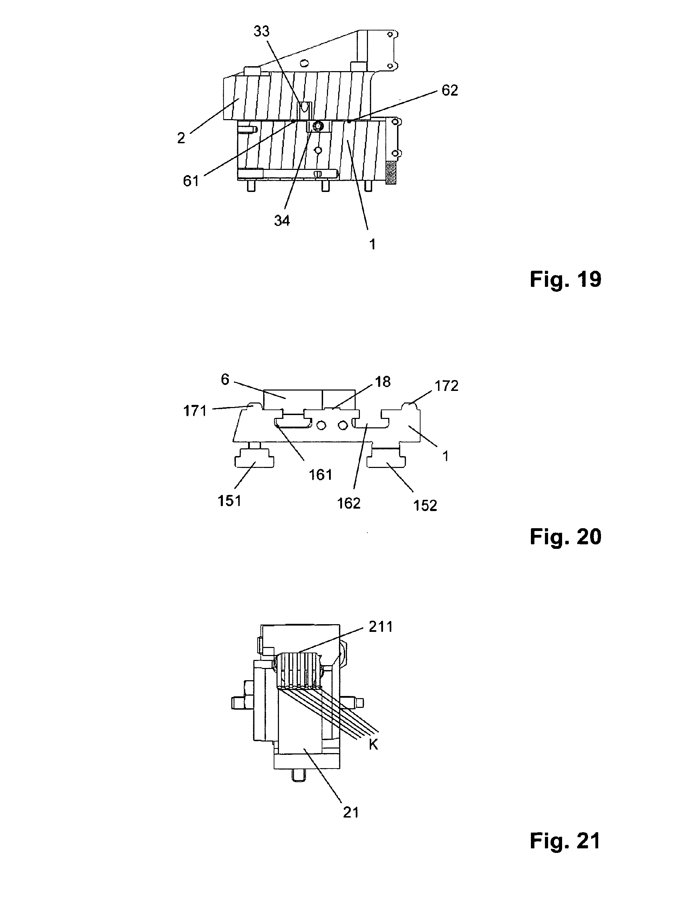

Eine Seitenansicht einer weiteren Ausführungsform der erfindungsgemäßen Vorrichtung, in welcher der Grundhalter 1 als Basis einer verstellbaren Koordinate eines Werkzeughalterhalters 2 aus zwei Wechselhaltern 21, 22 und einem Zwischenhalter 23 fungiert, ist in Fig. 17 gezeigt. Fig. 18 zeigt eine Aufsicht auf diese Ausführungsform, in welcher der Voreinstellpunkt 14 des Werkzeughalters 2 am Grundhalter zu erkennen ist. Der Abschnitt der ersten Kühlmittelleitung 31, welcher im Grundhalter 1 angeordnet ist in jeder Voreinstellungsposition des Werkzeughalters 2 mit dem Abschnitt der ersten Kühlmittelleitung 31, welcher im Werkzeughalter 2 angeordnet ist, fluidisch verbunden ist, und der Abschnitt der zweiten Kühlmittelleitung 32, welcher im Grundhalter 1 angeordnet ist in jeder Voreinstellungsposition des Werkzeughalters 2 mit dem Abschnitt der zweiten Kühlmittelleitung 32, welcher im Werkzeughalter 2 angeordnet ist, fluidisch verbunden ist. Hierzu weist der Werkzeughalter 2 auf seiner dem Grundhalter 1 zugewandten Seite in Verschiebungsrichtung über eine vorgebbare Länge offene Kanäle 33 auf, wobei eine fluidische Verbindung zwischen diesen Kanälen 33 und Auslassöffnungen 34 des Grundhalters 1 ausgebildet ist. Dies ist in Fig. 19 dargestellt. Weiterhin sind Abdichtelemente 61, 62 zwischen dem Grundhalter 1 und dem Werkzeughalter 2 vorgesehen.

Die Schnittstelle zwischen Grundhalter und Wechselhalter ist hierbei so flexibel ausgebildet, dass ein überwiegender Teil von Einstellarbeiten für eine spanabhebende Verformung an einem separaten Voreinstellplatz mittels hochgenau arbeitender Voreinstellgeräte vorgenommen werden kann, und zwar ausschließlich im Bereich des Wechselhalters 2, wobei an diesem relativ zum Grundhalter 1 in einer vorgegebenen Richtung verschiebbaren Wechselhalter 2 variable Anschläge vorhanden sind, die am Voreinstellpunkt 14 des Grundhalters 1 präzisionspositioniert werden. Hierdurch ist es möglich, die jeweilige, auf das entsprechende Werkstück für dessen Bearbeitung bezogene Präzisionspositionierung des Bearbeitungswerkstücks in den Voreinstellbereich vollständig zu verlagern, wo bestimmte, schon früher gewonnene Positionen schnell wieder hergestellt werden können, während im Bereich des Grundhalters 1 lediglich dessen Relativpositionierung etwa zur Spindelstirnseite noch eine Rolle spielt, die ohne größeren Aufwand, beispielsweise unter Verwendung einer speziellen Einstellvorrichtung an der Bearbeitungsmaschine schnell bestimmt werden kann. Es ist allerdings auch möglich, bei der Herstellung der erfindungsgemäßen Vorrichtung eine Koordinatenvorbestimmung durch Simulation vorzunehmen. Dies ermöglicht eine schnelle Inbetriebnahme der erfindungsgemäßen Vorrichtung. In Fig. 20 ist eine Verbindung zwischen Grundhalter 1 und einem Anschlag 6 dargestellt. Zur eigenen Fixierung des Grundhalters 1 beispielsweise auf dem Querschlitten einer Mehrspindeldrehmaschinen, weist der Grundhalter 1 nach unten gerichtete, in einer Doppelreihe angeordnete T-Nutsteine 151, 152 auf, die über von oben bedienbare, zugeordnete Schraubbolzen, wie beispielsweise Innensechskantschrauben festgespannt werden können. Zwei Längsreihen von T-Nuten 161, 162 verlaufen parallel zu, vom plattenförmigen Grundkörper des Grundhalters 1 nach oben vorspringenden, präzisionsgeschliffenen doppelten Führungsbahnen 171, 172 die als halbrunde, gegebenenfalls im Kopfbereich abgeschliffenen Längserhebungen dazu dienen, eine Präzisionspositionierung des jeweiligen, auf dem Grundhalter 1 aufgesetzten Werkzeughalters (nicht gezeigt) sicherzustellen. Weiterhin weist der Grundhalter 1 zwischen den beiden T-Nuten 161, 162 eine Erhebung 18 auf. Diese fungiert als Unterstützung für einen Maschinenschlitten und ermöglicht eine verbesserte Kraftverteilung.

Indem der Nullpunktanschlag 13 des Werkzeughalters 2 auf einer Seite der Längsachse L des Werkzeughalters 2 am Grundhalter 1 angeordnet ist und der Voreinstellpunkt 14 des Werkzeughalters 2 auf der anderen Seite der Längsachse L des Werkzeughalters 2 am Grundhalter 1 angeordnet ist, ist es möglich, beide Positionierungsmöglichkeiten des Werkzeughalters 2 in einer einzigen Vorrichtung zu realisieren.

Die Kühlmittelauslässe 211, 221, 222 des Werkzeughalters 2 können auf verschiedene Weisen ausgeführt werden. Neben einer Ausführung als Rohr, wie dies in Fig. 1 dargestellt ist, ist beispielsweise auch eine Ausführung als Düsenaufsatz möglich. Eine Ansicht eines solchen Kühlmittelauslasses 211 am ersten Wechselhalter 21 in Richtung des austretenden Kühlmittels ist in Fig. 21 dargestellt. Dort ist zu sehen, dass ein derartiger Kühlmittelauslass 211 den Austritt von Kühlmittel in mehreren Kühlmittelstrahlen K ermöglicht. Derartige Kühlmittelstrahlen K können winkelgerecht auf einem Werkstück positioniert werden.

## Patentansprüche

1. Vorrichtung für Bearbeitungsmaschinen zum Umrüsten auf andere Werkzeuge und/oder Einstellen der Werkzeuge mit mindestens einem im Wesentlichen plattenförmigen Grundhalter (1), auf dem wenigstens ein ein spanabhebendes Bearbeitungswerkzeug tragender ein- oder mehrteiliger Werkzeughalter (2) befestigt ist, wobei
- sowohl in dem Grundhalter (1) als auch in dem wenigstens einen, ein- oder mehrteiligen Werkzeughalter (2) eine erste Kühlmittelleitung (31) und eine zweiter Kühlmittelleitung (32) angeordnet sind,
- die erste Kühlmittelleitung (31) mit mindestens einem ersten Kühlmittelauslass (211) in dem Werkzeughalter (2) verbunden ist, und
- die zweite Kühlmittelleitung (32) mit mindestens einem zweiten Kühlmittelauslass (221, 222) in dem Werkzeughalter (2) verbunden ist,
**dadurch gekennzeichnet, dass**
- der Grundhalter (1) einen ersten Kühlmitteleinlass (11) und einen zweiten Kühlmitteleinlass (12) aufweist, die jeweils fluidisch mit der ersten Kühlmittelleitung (311, 312, 313, 314) und mit der zweiten Kühlmittelleitung (321, 322, 323, 324) verbunden sind.

2. Vorrichtung nach Anspruch 1, **dadurch gekennzeichnet, dass** der Grundhalter mindestens eine Einstelleinrichtung (4) aufweist, die eingerichtet ist, um die fluidische Verbindung des ersten Kühlmitteleinlasses (11) mit einem Abschnitt der ersten Kühlmittelleitung (311, 312, 313, 314) und/oder mit einem Abschnitt der zweiten Kühlmittelleitung (321, 322, 323, 324) ganz oder teilweise zu unterbrechen, und um die fluidische Verbindung des zweiten Kühlmitteleinlasses (12) mit einem Abschnitt der ersten Kühlmittelleitung (311, 312, 313, 314) und/oder mit einem Abschnitt der zweiten Kühlmittelleitung (321, 322, 323, 324) ganz oder teilweise zu unterbrechen.

3. Vorrichtung nach Anspruch 2, **dadurch gekennzeichnet, dass** die Einstelleinrichtung (4) mindestens vier Einstellelemente (41, 42, 43, 44) umfasst, wobei jedes Einstellelement (41, 42, 43, 44) eingerichtet ist, um eine der beiden Kühlmitteleitungen (311, 312, 313, 314, 321, 322, 323, 324) wahlweise ganz oder teilweise zu unterbrechen.

4. Vorrichtung nach Anspruch 3, **dadurch gekennzeichnet, dass** mindestens zwei Einstellelemente (41, 43) in der ersten Kühlmittelleitung (311, 312, 313, 314) angeordnet sind und mindestens zwei Einstellelemente (42, 44) in der zweiten Kühlmittelleitung (321, 322, 323, 324) angeordnet sind.

5. Vorrichtung nach Anspruch 3 oder 4, **dadurch gekennzeichnet, dass** die erste Kühlmittelleitung einen Einlassbereich (311) und einen Auslassbereich (312) aufweist, wobei der erste Kühlmitteleinlass (11) mit dem Einlassbereich (311) der ersten Kühlmittelleitung verbunden ist und ein Einstellelement (41) eingerichtet ist, um eine Verbindung zwischen dem Einlassbereich (311) und dem Auslassbereich (312) der ersten Kühlmittelleitung ganz oder teilweise zu unterbrechen.

6. Vorrichtung nach Anspruch 5, **dadurch gekennzeichnet, dass** die zweite Kühlmittelleitung einen Einlassbereich (321) und einen Auslassbereich (322) aufweist, wobei der zweite Kühlmitteleinlass (12) mit dem Einlassbereich (321) der zweiten Kühlmittelleitung verbunden ist und ein Einstellelement (44) eingerichtet ist, um eine Verbindung zwischen dem Einlassbereich (321) und dem Auslassbereich (322) der zweiten Kühlmittelleitung ganz oder teilweise zu unterbrechen.

7. Vorrichtung nach Anspruch 6, **dadurch gekennzeichnet, dass** ein Einstellelement (42) eingerichtet ist, um eine Verbindung zwischen dem Einlassbereich (311) der ersten Kühlmittelleitung und dem Auslassbereich (322) der zweiten Kühlmittelleitung ganz oder teilweise zu unterbrechen und ein Einstellelement (43) eingerichtet ist, um eine Verbindung zwischen dem Einlassbereich (321) der zweiten Kühlmittelleitung und dem Auslassbereich (312) der ersten Kühlmittelleitung ganz oder teilweise zu unterbrechen.

8. Vorrichtung nach einem der Ansprüche 1 bis 7, **dadurch gekennzeichnet, dass** jede Kühlmittelleitung mindestens zwei Anschlussbereiche (313, 314, 323, 324) aufweist, wobei mindestens ein Anschlussbereich (313, 323) jeder Kühlmittelleitung durch einen Wechselhalter (21, 22) verschlossen ist und mindestens ein Anschlussbereich (314, 324) derselben Kühlmittelleitung mit einem Kühlmittelauslass (211, 221, 222) verbunden ist, der an dem Wechselhalter (2) angeordnet ist.

9. Vorrichtung nach einem der Ansprüche 1 bis 8, **dadurch gekennzeichnet, dass** die erste Kühlmittelleitung (311, 312, 313, 314) mit einem ersten Kühlmittelauslass (211) in dem Werkzeughalter (2) verbunden ist und die zweite Kühlmittelleitung (321, 322, 323, 324) mit zwei zweiten Kühlmittelauslässen (221, 222) in dem Werkzeughalter (2) verbunden ist.

10. Vorrichtung nach einem der Ansprüche 1 bis 9, **dadurch gekennzeichnet, dass** der erste Kühlmittelanschluss (11) mit einer ersten Kühlmittelquelle verbunden ist und der zweite Kühlmittelanschluss (12) mit einer zweiten Kühlmittelquelle verbunden ist, wobei die zweite Kühlmittelquelle Kühlmittel mit einem höheren Druck bereitstellt, als die erste Kühlmittelquelle.

11. Vorrichtung nach einem der Ansprüche 1 bis 10, **dadurch gekennzeichnet, dass** der Grundhalter (1) und der Werkzeughalter (2) relativ verschieblich zueinander angeordnet sind.

12. Vorrichtung nach Anspruch 11, **dadurch gekennzeichnet, dass** der Werkzeughalter (2) einen voreingestellten Nullpunkt (13) aufweist.

13. Vorrichtung nach Anspruch 11 oder 12, **dadurch gekennzeichnet, dass** der Werkzeughalter entlang seiner Längsachse (L) voreinstellbar ist.

14. Vorrichtung nach Anspruch 13, **dadurch gekennzeichnet, dass** der Abschnitt der ersten Kühlmittelleitung, welcher im Grundhalter (1) angeordnet ist in jeder Voreinstellungsposition des Werkzeughalters (2) mit dem Abschnitt der ersten Kühlmittelleitung, welcher im Werkzeughalter (2) angeordnet ist, fluidisch verbunden ist, und der Abschnitt der zweiten Kühlmittelleitung, welcher im Grundhalter (1)angeordnet ist in jeder Voreinstellungsposition des Werkzeughalters (2) mit dem Abschnitt der zweiten Kühlmittelleitung, welcher im Werkzeughalter (2) angeordnet ist, fluidisch verbunden ist.
